**Europäisches Patentamt**

(19) **European Patent Office** (11) Numéro de publication: **0 128 083**

**Office européen des brevets** **A1**

(12) # DEMANDE DE BREVET EUROPEEN

(21) Numéro de dépôt: **84401069.4**

(22) Date de dépôt: **24.05.84**

(51) Int. Cl.³: **F 41 D 10/36**
**F 16 D 11/10**

(30) Priorité: **03.06.83 FR 8309219**

(43) Date de publication de la demande:
**12.12.84 Bulletin 84/50**

(84) Etats contractants désignés:
**BE CH DE GB LI**

(71) Demandeur: **ETAT-FRANCAIS représenté par le**
**DELEGUE GENERAL POUR L'ARMEMENT**
**Bureau des Brevets et Inventions de la Délégation**
**Générale pour l'Armement 26, Boulevard Victor**
**F-75996 Paris Armées(FR)**

(72) Inventeur: **Rochelle, Marc**
**29, rue Jean Perrin**
**F-18000 Bourges(FR)**

(72) Inventeur: **Fougeroux, Thierry**
**"Les Moreaux" Saint-Eloy de Gy**
**F-18110 Saint Martin D'Auxigny(FR)**

(54) **Dispositif de décrabotage pour ligne d'étoiles d'alimentation en munitions d'armes automatiques.**

(57) La présente invention concerne un dispositif permettant d'interrompre à l'arrêt l'entraînement en rotation d'une ligne d'étoiles d'alimentation en munitions pour armes automatiques.

La ligne d'alimentation étant actionnée en rotation par un arbre de commande (5) entraîné par unpignon moteur (4), le dispositif comporte un organe de manoeuvre (9) amovible permettant à la fois de décraboter l'arbre de commande d'avec le pignon moteur et de mettre en rotation l'arbre de commande seul. Il comporte au moins un culbuteur (6) basculant, coopérant avec l'extrémité de l'organe de manoeuvre (9), notamment avec l'encoche (9a) pour verrouiller l'organe de manoeuvre à l'arbre de commande de la ligne d'étoiles d'alimentation en munitions.

Application à l'alimentation des armes automatiques, de tous calibres, plus particulièrement de 15 à 40 mm.

FIG.1

EP 0 128 083 A1

La présente invention concerne les systèmes d'alimentation en munition d'armes automatiques, et plus particulièrement un dispositif permettant de dissocier ceux-ci de leur système d'entrainement.

Dans ce secteur technique, les pourvoyeurs à rotor, c'est-à-dire à roues en étoiles, appelés aussi lignes d'alimentation à étoiles, sont destinés à alimenter une arme automatique en munitions assemblées en bandes à l'aide de maillons et de crochets. Ils comportent un poste d'extraction dans lequel défile la bande de munitions sous l'action d'un rotor central à roues en étoile, et où chaque munition, enserrée par un maillon, est extraite de celui-ci pour être acheminée vers une position d'attente ou vers une position d'introduction dans l'arme.

Plus particulièrement, mais non exclusivement, sont concernés ici les systèmes d'étoiles d'alimentation pour arme automatique de tout calibre, et plus particulièrement d'un calibre de 15 à 40 mm.

On rappelle que les lignes d'alimentation de ce genre sont actionnées en rotation par un arbre de commande, lui-même entraîné par un arbre moteur soit relié à une motorisation externe à l'arme, qui par exemple, provoque également le mouvement alternatif de la culasse, soit entraîné par emprunt de gaz.

Lors du retrait ou de l'introduction d'une bande de munitions, par exemple en début de service ou pour changement de type de munitions, ou encore en cas d'incident de fonctionnement, il est nécessaire de débrayer rapidement et sûrement la motorisation des systèmes d'alimentation afin de pouvoir manoeuvrer uniquement le système d'alimentation en munitions.

Pour effectuer ces opérations, on connaît par exemple un dispositif de liaison à crabots entre la ligne d'alimentation à étoiles et son arbre moteur. Ce dispositif présente trois positions : en position crabotée, la ligne d'étoile est entraînée en rotation, en position intermédiaire, la ligne d'étoile est folle, tandis qu'en position décrabotée, elle est verrouillée à la boîte de culasse de l'arme et donc immobilisée en rotation. Il en résulte qu'est seule possible une manoeuvre manuelle des étoiles au niveau du magasin d'alimentation, manoeuvre qui est longue est dangereuse pour le servant.

L'invention se propose de remédier à ces inconvénients en proposant un dispositif de crabotage et de décrabotage simple et fiable qui permette à la fois d'interrompre /la motorisation la liaison avec de la ligne d'étoiles d'alimentation et de faire tourner à volonté cette ligne dans les deux sens.

L'invention a donc pour objet un dispositif de décrabotage pour ligne d'étoiles d'alimentation en munitions d'arme automatique, cette ligne d'alimentation étant actionnée en rotation par un arbre de commande entraîné par un arbre moteur, dispositif caractérisé en ce qu'il comporte un organe de manoeuvre amovible pour d'une part, actionner le décrabotage de l'arbre de commande d'avec l'arbre moteur, et d'autre part, mettre en rotation l'arbre de commande seul.

De préférence, l'organe de manoeuvre est solidaire de l'arbre de commande de la ligne d'étoile en position décrabotée, afin d'assurer une sécurité de manoeuvre.

L'invention a également pour objet un dispositif tel que décrit plus haut, caractérisé en ce qu'il comporte au moins un culbuteur basculant autour d'un axe orthogonal à l'axe de l'arbre de commande, le culbuteur étant lié en rotation d'une part à cet arbre, et, d'autre part, en position crabotée, lié en rotation à un moyen d'entrainement, actionné par l'arbre moteur, monté libre et coaxial sur l'arbre de commande et solidaire en translation de celui-ci, le culbuteur présentant une saillie sur laquelle vient prendre appui l'organe de manoeuvre, ce dernier présentant au moins un moyen de liaison en rotation avec l'arbre de commande.

Dans un mode préféré de réalisation, l'organe de manoeuvre présente une encoche coopérant avec la saillie du culbuteur pour solidariser le culbuteur et l'organe de manoeuvre dans la position décrabotée du culbuteur.

Les caractéristiques de la présente invention sont illustrées par la description ci-après d'un mode de réalisation donné à titre non limitatif, en référence au dessin sur lequel :

- la figure 1 est une coupe longitudinale montrant le dispositif de décrabotage en position crabotée,

- la figure 2 est une coupe identique en position décrabotée, et

- la figure 3 est une coupe schématique suivant III - III de la figure 2.

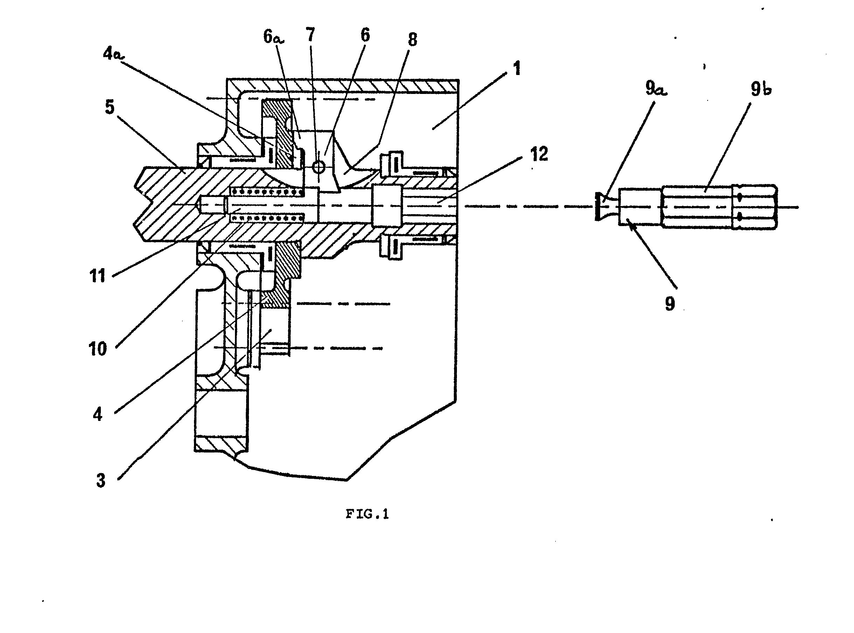

Dans le boîtier arrière 1 d'une arme automatique, la figure 1 montre de façon connue un pignon moteur 4 qui entraîne en rotation l'arbre 5 de commande d'une ligne d'étoiles d'alimentation en munitions non représentée. Le pignon moteur est par exemple actionné par un moteur externe à l'arme et solidaire en rotation d'un tambour provoquant le mouvement rectiligne alternatif de la culasse.

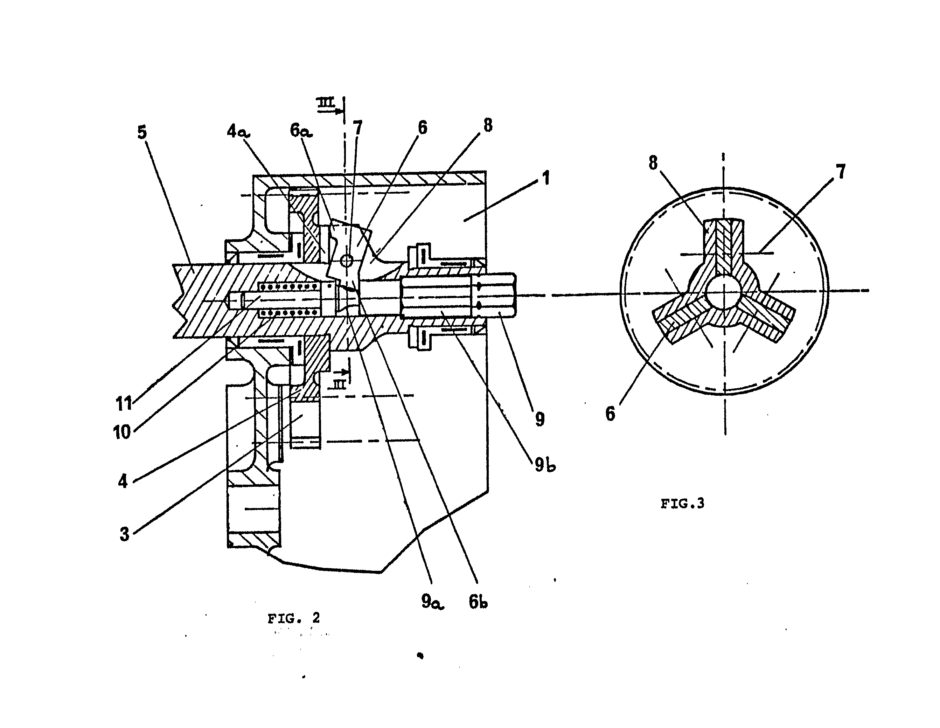

Selon l'invention, la prise de mouvement de l'arbre 5 sur le pignon 4 entraîné par le pignon 3 s'effectue par un système de crabots présentant trois culbuteurs disposés à 120° autour de l'arbre 5 (voir figure 3). Le nombre de culbuteurs est en principe égal au nombre de branches des étoiles de la ligne d'alimentation, mais peut être différent en fonction de la démultiplication appliquée à la rotation de l'arbre de commande de la ligne d'étoiles. Un culbuteur 6 est monté basculant autour d'un axe 7 orthogonal à l'axe de l'arbre 5, fixé sur une chape de l'extrémité arrière 8 de l'arbre 5 et est donc lié en rotation à cet arbre. Ce culbuteur est muni d'une saillie 6a s'engageant dans un logement 4a pratiqué sur la surface arrière du pignon 4. Le pignon 4 est monté libre et coaxial sur l'arbre 5, mais est solidaire en translation de celui-ci. Dans sa partie interne proche de l'axe de l'arbre 5, le culbuteur présente une saillie 6b sur laquelle vient prendre appui l'extrémité d'un organe de manoeuvre 9, pour, en position décrabotée (figure 2), basculer le culbuteur à l'encontre de la force de rappel qu'un ressort 10 logé coaxialement dans l'arbre 5 applique à une tige coaxiale 11 formant butée pour le culbuteur en position crabotée (figure 1). L'embout de l'organe de manoeuvre, lequel se présente sous forme de clé ou manivelle amovible, présente une encoche 9a de forme complémentaire à celle de la saillie 6b du culbuteur de manière à solidariser ce dernier et l'organe de manoeuvre en position décrabotée du culbuteur (figure 2). L'extrémité cylindrique de l'organe de manoeuvre présente des méplats ou cannelures longitudinaux 9b pour sa liaison en rotation avec l'arbre de commande sur l'extrémité arrière duquel les méplats ou cannelures correspondants sont pratiqués : dans un logement 12 longitudinal où vient s'engager l'organe de manoeuvre.

Le fonctionnement du dispositif de décrabotage selon l'invention est le suivant.

Quant le servant de l'arme veut débrayer la rotation continue de la ligne d'étoiles d'alimentation, soit pour modifier le type des munitions alimentées, donc pour dégager les dernières munitions en bande dans le magasin d'alimentation et introduire une nouvelle bande, soit en cas d'incident de fonctionnement, soit encore en début d'opération, lors de l'introduction d'une bande de munitions, il engage l'organe de manoeuvre à travers l'ouverture pratiquée dans le boitier arrière au niveau d'un palier arrière soutenant l'arbre de commande de la ligne d'étoiles. L'embout de l'organe de manoeuvre vient en butée au fond du logement cylindrique pratiqué dans l'arbre pour simultanément provoquer le basculement des culbuteurs et repousser l'action du ressort de rappel de ces culbuteurs en position crabotée. L'arbre de commande n'étant plus lié en rotation au pignon moteur, il peut alors être actionné manuellement en rotation dans les deux sens pour effectuer les opérations mentionnées plus haut. La position de manoeuvre, correspondant à l'embout engagé jusqu'au fond de sa course, peut être repérée par un index extérieur. On note de plus la sécurité apportée par la solidarisation de l'organe de manoeuvre avec le dispositif de crabotage dans la position décrabotée des culbuteurs : à la fin de l'opération, on ne peut retirer la clé ou la manivelle que si la ligne d'alimentation est à nouveau en position crabotée avec le pignon moteur en rotation.

5

**REVENDICATIONS**
--------------------------------

1.- Dispositif de décrabotage pour ligne d'étoiles d'alimentation en munitions d'arme automatique, cette ligne d'alimentation étant actionnée en rotation par un arbre de commande (5)
entraîné un pignon moteur (4), dispositif caractérisé en ce
qu'il comporte un organe de manoeuvre amovible (9) pour d'une
part, actionner le décrabotage de l'arbre de commande d'avec
le pignon moteur, et d'autre part, mettre en rotation l'arbre de
commande seul.

2.- Dispositif selon la revendication 1, caractérisé en ce
que l'organe de manoeuvre est solidaire de l'arbre de commande
de la ligne d'étoile en position décrabotée.

3.- Dispositif selon l'une des revendications 1 ou 2, caractérisé en ce qu'il comporte au moins un culbuteur basculant (6)
autour d'un axe orthogonal à l'axe de l'arbre de commande, le
culbuteur étant lié en rotation d'une part à cet arbre, et,
d'autre part, en position crabotée, lié en rotation à un moyen
d'entraînement actionné par le pignon moteur, monté libre et coaxial
sur l'arbre de commande et solidaire en translation de celui-ci,
le culbuteur présentant une saillie (6b), sur laquelle vient
prendre appui l'organe de manoeuvre, ce dernier présentant au
moins un moyen de liaison (9b) en rotation avec l'arbre de commande.

4.- Dispositif selon l'une des revendications 2 ou 3, caractérisé en ce que l'organe de manoeuvre présente une encoche (9a)
coopérant avec la saillie du culbuteur pour solidariser le
culbuteur et l'organe de manoeuvre dans la position décrabotée
du culbuteur.

5.- Dispositif selon l'une des revendications 1 à 4, caractérisé en ce qu'il comporte un nombre de culbuteurs égal à celui
des branches d'étoiles de la ligne d'alimentation.

6 - Dispositif selon l'une des revendications 1 à 5, caractérisé
en ce qu'il comporte des moyens de rappel (10,11) des culbuteurs
dans leur position crabotée.

7 - Dispositif selon l'une des revendications 1 à6, caractérisé en
ce que l'organe de manoeuvre est une manivelle.

FIG.1

0128083

FIG.3

FIG. 2

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-1 798 047 (UBRICH) <br><br> * en entier * | 1-3,6, 7 | F 41 D 10/36 <br> F 16 D 11/10 |
| | --- | | |
| Y | DE-A-2 430 002 (WEGMAN) <br><br> * figure 1; page 1, paragraphes 1,2; page 4, paragraphe 2; revendication 2 * | 1-3,6, 7 | |
| | --- | | |
| A | BE-A- 543 359 (BREVETS AERO-MECANIQUES) <br> * figure 2 * | | |
| | --- | | |
| A | BE-A- 677 263 (AKTIEBOLAGET BOFORS) <br> * figures; page 5, paragraphe 3; page 10, paragraphe 2; page 11 et page 12, en entier; page 13, paragraphe 1 * | | DOMAINES TECHNIQUES RECHERCHES (Int. Cl. 3) <br><br> F 41 D <br> F 16 D |
| | --- | | |
| A | GB-A- 712 867 (BREVETS AERO-MECANIQUES) <br><br> ----- | | |

Le présent rapport de recherche a été établi pour toutes les revendications

| Lieu de la recherche | Date d'achèvement de la recherche | Examinateur |
|---|---|---|
| LA HAYE | 27-08-1984 | HAMMOND A.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82